Europäisches Patentamt

European Patent Office

Office européen des brevets

(11) Publication number: **0 504 439 A1**

## (12) EUROPEAN PATENT APPLICATION

(21) Application number: **91104122.6**

(22) Date of filing: **18.03.91**

(51) Int. Cl.5: **B66F 3/02**

(43) Date of publication of application:
**23.09.92 Bulletin 92/39**

(84) Designated Contracting States:
**DE FR GB NL**

(71) Applicant: **FIAMMA S.p.A.**
**Viale Europa, 69**
**I-21010 Cardano al Campo (VA)(IT)**

(72) Inventor: **Pozzi, Carlo c/o FIAMMA S.P.A.**
**Viale Europa, 69**
**21010 Cardano al Campo(IT)**

(74) Representative: **Reichel, Wolfgang, Dipl.-Ing.**
**et al**
**Reichel und Reichel Parkstrasse 13**
**W-6000 Frankfurt am Main 1(DE)**

(54) **Adjustable lifting device.**

(57) The proposed lifting device includes one supporting tube (11), one sliding rod (14) in the same tube, one working roller (27) and one element (21) which has the double function of supporting the roller and of engaging it with above mentioned rod and releasing it from same rod.

FIG.3

## 1. FIELD OF THE INVENTION

The present invention concerns adjustable lifting devices, to be used for vehicles and particularly for hauled vehicles, including one telescopic rod and one working roller, toothed and shagreened, normally engaged with same rod and releasable at will.

## 2. FORMER TECHNIQUE

Among the lifting devices, or jacks, suited for vehicles, and particularly for hauled vehicles, it should be mentioned those including one telescopic sliding rod in one supporting tube, one working roller, toothed or shagreened, supported in a rotating way from same supporting tube and one fork, which has the function of keeping it normally engaged with the rod and which is manoeuvrable to release it from same rod.

When roller and rod are engaged, on rotating the roller, the rod gets up and down, displacing the burden to which it is bound; while, when the roller is disengaged from the rod, the jack can be shortened, making the rod re-enter into the support tube.

Jacks of this kind are not completely satisfactory, as they are quite complicated and take away much place.

## 3. SUMMARY OF THE INVENTION

Purpose of the invention is a lifting device which presents a simplified structure and which is easy and quick to assemble. Other purpose of the invention is a device with little encumbrance and safe in its working.

The lifting device, as per the invention, includes one supporting tube, one rod sliding inside the tube, and one rotating working roller, toothed or shagreened, normally engaged with above mentioned rod, which can be released from same rod, being the device featured from the fact that it includes one element able to support on rotating the same working roller and connected to same tube through binding means fit to allow the change from a working condition, when it keeps the said roller engaged with said rod to a non-working condition, when it releases it from same rod.

According to a preferred solution, said element is made from a U-shaped lever suited to support on rotation the said working roller, and which can be pivoted into the said roller with the interposition of elastic means able to keep it in a movable way, in said operating position.

With this solution only one element, such as the u-shaped lever, under the action of elastic means, carries on a double function, which is to support on rotating the working roller and to engage it with the rod and disengage it from same.

The result is one device of easy construction, safe operating, and extremely little encumbrance.

## 4. DETAILED DESCRIPTION OF THE INVENTION

Features and advantages of the invention are to be illustrated with reference to the pictures 1 + 12 enclosed, in which as example, non limiting, preferred realizations of same invention are showed.
- Picture 1 is a frontal view of the lifting device according to the invention;
- Picture 2 is a sectional view according to the general plan I-II of picture 1;
- Picture 3 is a sectional partial view according to the general plan III-III of picture 2;
- Picture 4 is a sectional partial view according to the general plan IV-IV of picture 2;
- Picture 5 is a sectional partial view according to the general plan V-V of picture 2;
- Picture 6 is a rear partial view of the device of picture 1;
- Picture 7 is a frontal view of one variant of the device of picture 1;
- Picture 8 is a sectional view according to the general plan VIII-VIII of picture 7;
- Picture 9 is a sectional partial view according to the general plan X-X of picture 8;
- Picture 10 is a sectional partial view according to the general plan X-X of picture 8;
- Picture 11 is a sectional partial view according to the general plan XI-XI of picture 8;
- Picture 12 is a rear partial view of the device of picture 7.

On picture 1 showed totally with no. 10 is the lifting device according to the invention; the device includes one supporting tube 11, visible also in picture 2 + 6, to which through the pin 12, one pedestal 13 for the laying on the ground is bound.

No 14 one shows one rod sliding inside the tube 11, which is in the specific case fitted with eyelets 15 for the pivoting on a vehicle, f.i. one hauled vehicle, not showed. The connection means, which allow to fix the device 10 to the vehicle in resting condition, are not shown.

On the tube 11 one sleeve 16 with rectangular section is welded, in one wall 17 from which a couple of openings 18 is obtained and in an opposite wall 19, and partially in the adjacent walls to this, one opening 20, for the lodging of one U-shaped lever, indicated with 21.

The U-shaped lever 21 is formed from a plate strip of suitable material, such as steel, plied substantially as a "U"; the lever is fitted with a base 22 having shape of cylindrical sector, as resulting from pict. 2 and 4, and with two arms 23 fitted with eyelets, each of these indicated with 24 and made from the intersection of two holes 25 and 26 of different diametre.

No 27 indicates one working roller, toothed or shagreened, which is supported on rotating, through the pivots 28, in the holes 25 of the lever 21.

The roller 27 is fitted with a shagreened handle 29, showed on picture 5, on which is fitted an hexagon nut 30, which allows to get hold of the handle through a suited tool, such as a wrench, and to get it into rotation, on manoeuvring the rod 14 up and down.

The lever 21, besides the function of supporting the roller 27, has also the task of keeping same roller 27 in operating position, engaged with the rod 14, under the action of two laminated spring, indicated with 31, lodged in suited seats 32 of the sleeve 16 and connected on operating to the arms 23 of same lever.

A dash indicate an handle 33, joint to the lever 21, which allows to operate it, rotating it towards the upper side, round the pivot formed from its base 22 and from the wall 17 of the sleeve 16, included between the couple of openings 18, in order to get the roller 27 in unoperating position, disengaged from the rod 14.

On assembling the device, the arms 23 of the lever 21 are inserted in the openings 18 of the sleeve 16, so that its base 22 is partially in contact with the wall 17 included between the couple of openings 18, and its end sides goes out from the opening 20; the roller 27 can then be mounted in the arms 23 of the lever 21 through one hole 26, and its pivots 28 can be positioned in the holes 25 of the eyelets 24, so that same roller is supported on rotating from said lever 21. Afterwards by mounting the springs 31, the roller 27 is keeped engaged with the rod 14, so that making it rotate, it is possible to operate the rod 14 and make it slide in the supporting tube 11, lifting and lowering the vehicle to which it is connected.

The roller 27 can be released from the rod 14, making the hande 33 rotate counter clockwise, so that the rod 14 can re-enter into the tube 11 and the lifting device can be put to resting position, fixed to the vehicle.

On picture 7 no. 100 indicates one lifting device, partially modified compared with the one on pictures 1 + 6, on which the similare parts are showed with same numbers.

In this case one casing 116 with rectangular section is welded to the tube 11, in one wall 117 from which it is obtained a couple of openings 118 , while in one opposite wall 119, and partly in the adjacent walls to this, one opening 120 is obtained for lodging the lever indicated with 21.

One plate 139 fitted with one pivot with hemispherical section stated with 140 is joint to the wall 117.

The lever 121 is formed from a plate strip, f.i. steel, plied with U-shape, to which one operating handle 133 is joint; the base 122 of the lever 121 presents one semicylindrical cavity 125, fit to get engaged with the pivot 140 and in its two arms 123 the holes 124 are obtained.

No. 127 indicates one operating roller, toothed or chagreened, preferably with helicoidal progress, which, through the pivots 128, is on rotating supported with one pre-established clearance, and therefore eccentrically, in the holes 124 of the lever 121.

An hexagonal head 130, which can be caught through a tool, such as a wrench, to get same roller into rotation, in the operations of lifting and lowering of the rod 14, is joint to the roller 127.

The lever 121's function is to support the roller 127 and to keep it into operating position, engaged with the rod 14, under the action of one spring 131, constituted from one U-folded thread, whose branches 134 form two lateral coils 135 and end with two reaction stems 136; the spring 131 is lodged between the casing 116 and the lever 121, with the stems 136 pre-loaded and lodged in the appropriate seats 137 of the arms 123.

The handle 133's function is to make the lever 121 rotate counter-clockwise round the pivot 140, in order to get the roller 127 in unoperating position, disengaged from the rod 14.

The lifting device 100 is assembled inserting the arms 123 of the lever 121 in the openings 118 of the casing 116, so that the cavity 125 get engaged with the pivot 140 and the roller 127 can be mounted in same lever, with the pivots 128 supported on rotating in an eccentrical way in the holes 124, keeped axially from the rod 14, as showed in picture 8.

The roller 127 is keeped engaged with the rod 14 from the burden exercised from the stems 136 from the spring 131 on the arms 123 of the lever 121, so that, when it is put into rotatig throught the hexagonal head 130, it operates the rod 14 and makes it slide in the supporting tube 11, lifting and lowering the vehicle to which it is connected.

On releasing the roller 127 from the rod 14, by rotating counter clockwise the handle 133, the same rod 14 can re-enter into the tube 11 and the device 100 can be put into resting condition, fixed to the vehicle.

The lifting devices 10 and 100 are particularly functional for the easy construction, the little encumbrance and the safe working.

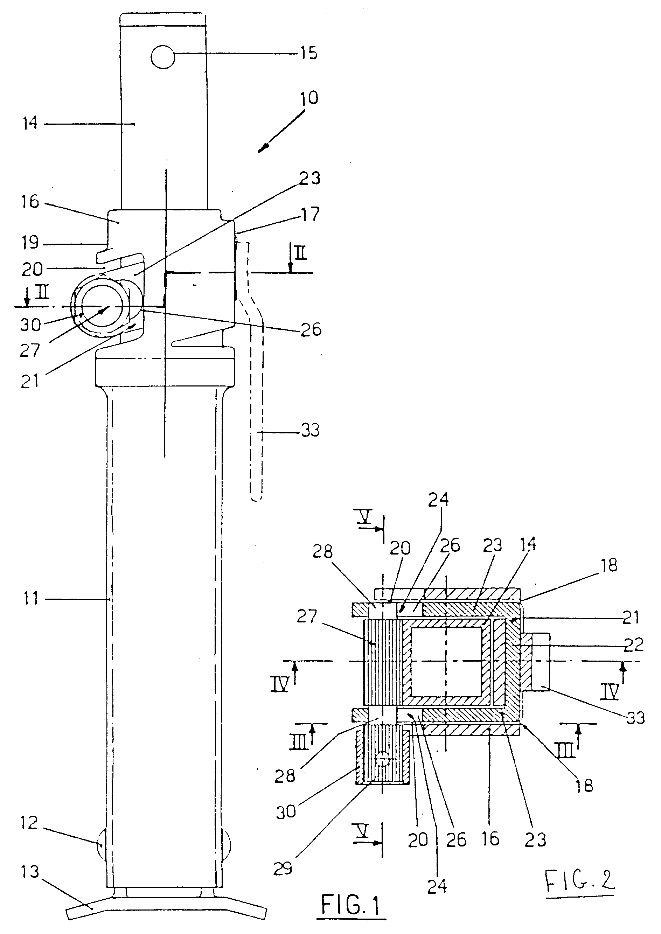

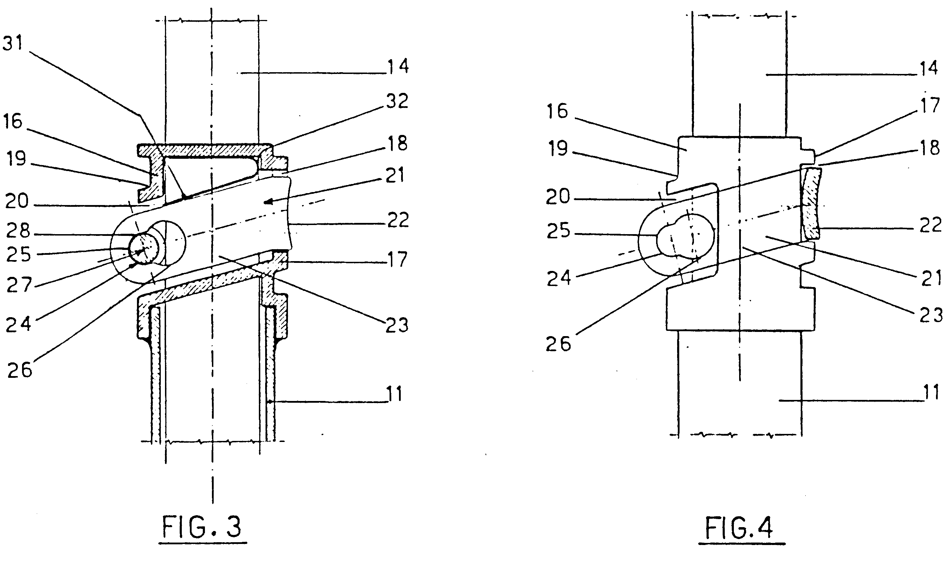

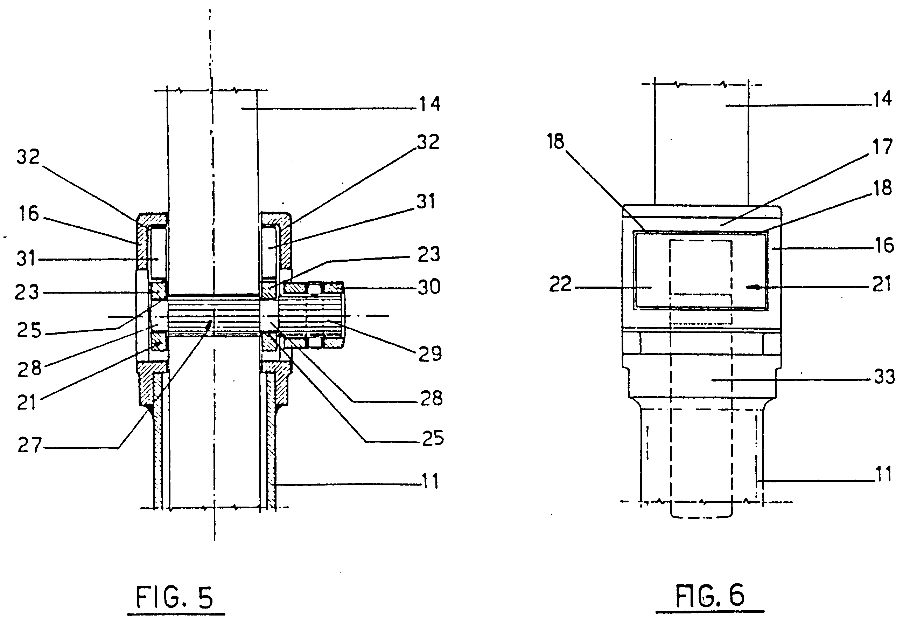

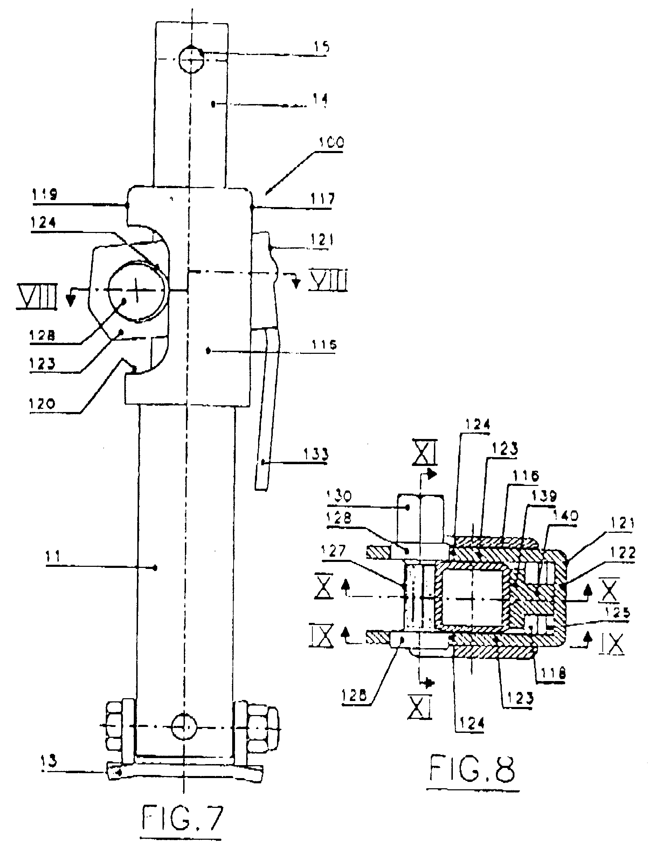

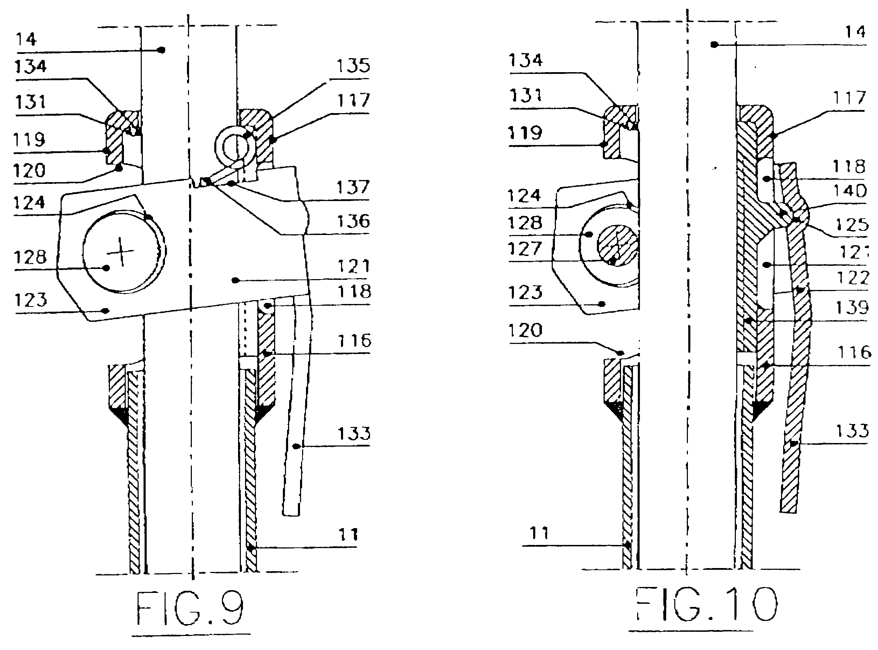

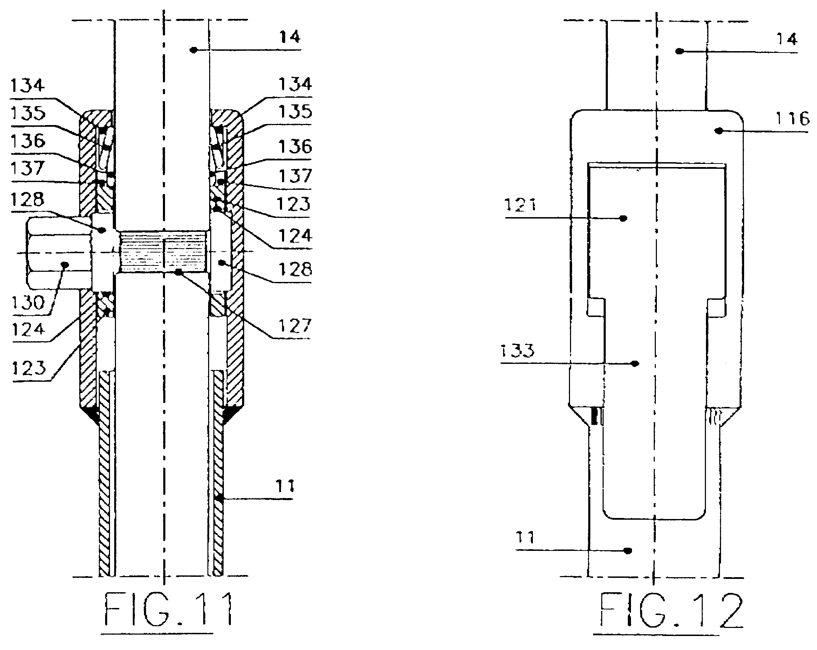

**Claims**

**1.** Lifting device for vehicles, particularly for hauled vehicles, including one supporting tube (11), one rod (14) sliding inside the same tube, and one rotating working roller (27,127), toothed or shagreened, normally engaged with above mentioned rod, and releasable from same rod, being the device featurized from the fact that it includes one element (21,121) able to support on rotating same working roller (27,127) and connected to same tube (11) through binding means (22,17;31;125,140,131;) suitable to allow the change from an operating condition, in which it keeps said roller (27,127) engaged with said rod (14) to an unoperating condition in which it releases it from same rod.

2. Device according to claim 1, featurized from the fact that the said element (21,121) is made from one lever able to support on rotating said working roller (27,127), which can be pivoted into said tube (11) with the interposition of elastic means (31,131) able to keep it in movable way, in said operating position.

3. Device according to claim 2, featurized from the fact that said lever (21) is made from a plate strip of suitable material folded substantially as a "U", with a base (22) having cylindrical sector shape, and two arms (23) fitted with eyelets (24), suitable to support on rotating the said working roller (27).

4. Device according to claims 2 and 3, featurized from the fact that said tube (11) is fitted will a sleeve (16) fitted with openings (18,20) for the lodging of said lever (21), so that said base (22) comes partially in touch with one wall (17) of same sleeve (16) and said arms (23) are engaged with said elastic means (31).

5. Device according to claim 4, featurized from the fact that said elastic means (31) are made of laminated springs.

6. Device according to claim 1, featurized from the fact that said working roller (27) is joint to one handle (29) on which one nut (30) is mounted, allowing to get hold of it through an appropriate tool.

7. Device according to claim 2, featurized from the fact that said lever (21,121) is joint to one operating handle (33,133).

8. Device according to claim 2, featurized from the fact that said lever (121) is made from one plate strip of suitable material folded substantially as a "U", with a base (122) fitted with a semicylindrical cavity (125) and two arms (123) fitted with holes (124), suitable to support on rotating with clearance, in eccentrical way, said working roller (127).

9. Device according to claims 2 and 8, featurized from the fact that said tube (11) is fitted with one casing (116) fitted with openings (118,120) for the lodging of said lever (121), and with one pivot (140) with which said cavity (125) can get engaged, so that said arms (123) are engaged with said elastic means (131).

10. Device according to claim 4, featurized from the fact that said elastic means (131) are constituted from one thread spring folded as a "U", with its branches (134) forming two lateral coils (135) and ending with two reaction stems (136) which can be lodged in appropriate seats (137) of the arms (123) of the lever (121).

11. Device according to claim 1, featurized from the fact that said working roller (127) is joint to an hexagonal head (130) which can be operated through a suitable tool.

FIG. 1

FIG. 2

FIG. 3

FIG. 4

EP 0 504 439 A1

14
17
18
16
21
33
11

18

22

## FIG. 6

14
32
31
23
30
29
28
25
11

32
16
31
23
25
28
21
27

## FIG. 5

7

FIG.7

FIG.8

FIG. 10

FIG. 9

14

116

121

133

11

FIG.12

14
134
135
136
137
123
124
128
127

11

134
135
136
137
128
130
124
123

FIG.11

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | DE-B-2 630 446 (K. LINNEPE)<br>* column 2, line 45 - column 4, line 11; fiugres 1-3 * | 1,2,4,6<br>,7,10,<br>11 | B 66 F    3/02 |
| A | DE-A-2 409 012 (A. HAHN et al.)<br>* page 5, lines 1-27; figures 1,2 * | 1,3,10 | |
| A | DE-U-1 870 577 (GEBR. HöNSCHEID)<br>* page 1, line 18 - page 2, line 4; figures 1-3 * | 1,8,9 | |
| | | | TECHNICAL FIELDS SEARCHED (Int. Cl.5) |
| | | | B 66 F |

The present search report has been drawn up for all claims

| Place of search | Date of completion of the search | Examiner |
|---|---|---|
| BERLIN | 19-11-1991 | WESTERMAYER W G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)